# EUROPÄISCHE PATENTANMELDUNG

(11) **EP 1 298 044 A1**
(43) Veröffentlichungstag der Anmeldung: **02.04.2003**
(21) Anmeldenummer: 01122982.0
(22) Anmeldetag: 26.09.2001
(51) Int. Cl.: B62J 1/02, B62K 25/04

(54) **Fahrrad**

(71) Anmelder: Roth, Stefan, 88422 Bad Buchau (DE)
(72) Erfinder: Roth, Stefan, 88422 Bad Buchau (DE)
(74) Vertreter: Kiessling, Christian

(57) **Zusammenfassung**

Bei einer Fahrrad-Vorrichtung mit einem Rahmen, an dem ein Sattel, eine Achse eines Hinterrades, eine mit zwei Pedalen versehene und über eine Kette mit der Achse des Hinterrades verbundene Antriebseinrichtung sowie eine auf eine die Achse eines Vorderrades tragende Gabel wirkende Lenkeinrichtung vorgesehen sind, wird eine gegenüber dem Stand der Technik verbesserte Federung des Sattels dadurch erreicht, dass der Rahmen vier Seitenstreben aufweist, die jeweils paarweise über Gelenkeinrichtungen miteinander verbunden sind.

## Beschreibung

Die Erfindung betrifft eine Fahrrad-Vorrichtung mit einem Rahmen, an dem ein Sattel, eine Achse eines Hinterrades, eine mit zwei Pedalen versehene und über eine Kette mit der Achse des Hinterrades verbundene Antriebseinrichtung sowie eine auf eine die Achse eines Vorderrades tragende Gabel wirkende Lenkeinrichtung vorgesehen sind.

Fahrrad-Vorrichtungen der eingangs genannten Art sind im Stand der Technik in unterschiedlichen Ausführungsformen bekannt, wobei eine gewisse Federung des Sattels mit Hilfe unterschiedlicher Mittel erzielt wird. Diesen Fahrrad-Vorrichtungen ist es jedoch gemein, dass eine bequeme und effektive Federung des Sattels bzw. des Sattelträgers über einen ausreichend großen und darüber hinaus vorgebbaren Auslenkungs- bzw. Elastizitätsbereich nicht erreicht wird.

Aufgabe der Erfindung ist es deshalb, eine Fahrrad-Vorrichtung zu schaffen, mit der eine gegenüber dem Stand der Technik verbesserte Federung des Sattels bzw. des Sattelträgers auch über einen im Vergleich zum Stand der Technik vergrößerten Auslenkungs- bzw. Elastizitätsbereich erreicht wird.

Für eine Vorrichtung der eingangs genannten Art wird diese Aufgabe erfindungsgemäß dadurch gelöst, dass der Rahmen vier Seitenstreben aufweist, die jeweils paarweise über Gelenkeinrichtungen miteinander verbunden sind.

Bevorzugte Ausführungsformen der Erfindung sind Gegenstand der Unteransprüche.

Bei der erfindungsgemäßen Fahrrad-Vorrichtung wird durch das Merkmal, dass der Rahmen vier Seitenstreben aufweist, die jeweils paarweise über Gelenkeinrichtungen miteinander verbunden sind, erreicht, dass eine Fahrrad-Vorrichtung geschaffen ist, bei der eine gegenüber dem Stand der Technik längere bzw. vergrößerte und damit feiner einstellbare und empfindlicher reagierende Federeinrichtung zwischen zwei sich gegenüberliegenden Gelenkeinrichtungen platzierbar ist und somit eine sehr bequeme und effektive Federung des Sattels ermöglicht ist.

Gemäß einer ersten bevorzugten Ausführungsform der erfindungsgemäßen Vorrichtung ist vorgesehen, dass eine Seitenstrebe zwei parallel angeordnete Einzelstreben enthält.

Gemäß einer anderen bevorzugten Ausführungsform der erfindungsgemäßen Vorrichtung ist vorgesehen, dass die vier Seitenstreben des Rahmens die Form eines Parallelogramms aufweisen.

Gemäß einer weiteren bevorzugten Ausführungsform der erfindungsgemäßen Vorrichtung ist vorgesehen, dass das Parallelogramm gleichschenklig ausgebildet ist

Gemäß einer weiteren bevorzugten Ausführungsform der erfindungsgemäßen Vorrichtung ist vorgesehen, dass der Sattel in der Nachbarschaft einer ersten Gelenkeinrichtung mit dem Rahmen verbunden ist.

Gemäß einer wichtigen bevorzugten Ausführungsform der erfindungsgemäßen Vorrichtung ist vorgesehen, dass die erste Gelenkverbeindung gegen eine ihr gegenüberliegende zweite Gelenkverbindung mittels einer Federeinrichtung so vorgespannt ist, dass bei Absenz weiterer Krafteinwirkungen ein fest vorgegebenen Winkel zwischen den Seitenstreben des Parallelogramms vorgegeben ist. Die Federeinrichtung ist dabei vorzugsweise eine Spiralfeder oder eine Gasdruckfeder. Der weiteren ist die Federeinrichtung dabei vorzugsweise im Inneren eines Hohlrohes angeordnet.

Gemäß einer weiteren wichtigen bevorzugten Ausführungsform der erfindungsgemäßen Vorrichtung ist vorgesehen, dass das Hohlrohr gebogen ist und einen Krümmungsradius aufweist, der demjenigen eines Kreises mit einem Radius der Länge derjenigen Seitenstreben entspricht, die an die mit der Achse des Hinterrades verbundene dritte Gelenkeinrichtung angrenzen, wobei das Hohlrohr seitliche Aussparungen zur Aufnahme der zweiten Gelenkeinrichtung aufweist.

Bei der erfindungsgemäßen Fahrrad-Vorrichtung sind vorzugsweise im Bereich jeder Gelenkeinrichtung zusätzliche Federeinrichtungen vorgesehen. Die Federeinrichtungen können dabei von Spiralfedern gebildet sein, oder sie können alternativ auch von Gasdruckfedern oder von einem elastischen Kunststoffmaterial gebildet sein. Durch dies Federeinrichtungen ist die insgesamte Federungscharakteristik des erfindungsgemäßen Fahrrades änderbar und an unterschiedliche Untergrundverhältnisse anpassbar.

Gemäß einer weiteren wichtigen bevorzugten Ausführungsform der erfindungsgemäßen Vorrichtung ist vorgesehen, dass die Antriebseinrichtung in der Nachbarschaft der zweiten Gelenkeinrichtung an dem Rahmen befestigt ist. Alternativ ist dabei gemäß einer weiteren bevorzugten Ausführungsform vorgesehen, dass die Antriebseinrichtung an demjenigen Ende des Hohlrohres befestigt ist, das dem Sattel gegenüberliegt.

Die erfindungsgemäße Vorrichtung wird im folgenden anhand einer bevorzugten Ausführungsform erläutert, die in der Figur der Zeichnung dargestellt ist. Darin zeigt:

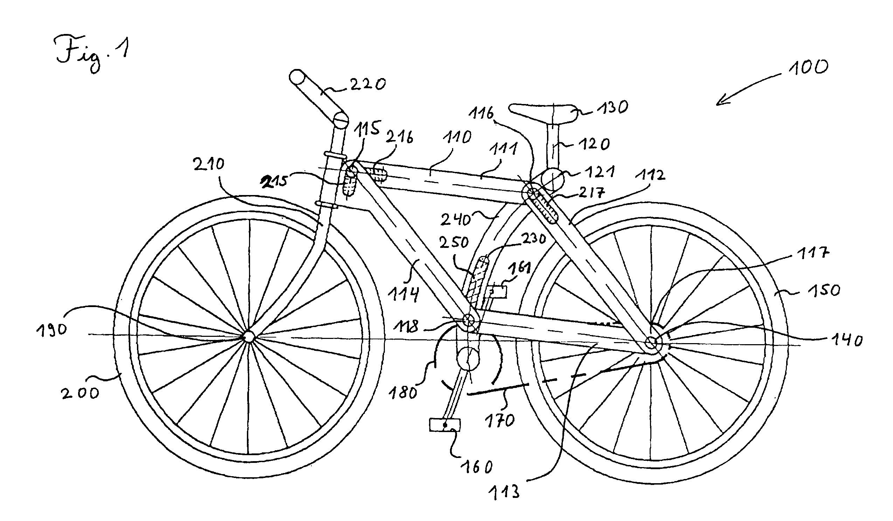

- Fig.1: eine erste bevorzugte Ausführungsform der erfindungsgemäßen Fahrrad-Vorrichtung in einer Seitenansicht.

Die in der Figur 1 dargestellte bevorzugte Ausführungsform der erfindungsgemäßen Fahrrad Vorrichtung 100 Fahrrad-Vorrichtung enthält einen Rahmen 110, an dem über eine Trägereinrichtung 120, 121 ein Sattel 130 befestigt ist und an dem des weiteren eine Achse 140 eines Hinterrades 150, eine mit zwei Pedalen 160, 161 versehene und über eine Kette 170 mit der Achse 140 des Hinterrades 150 verbundene Antriebseinrichtung 180 sowie eine auf eine die Achse 190 eines Vorderrades 200 tragende Gabel 210 wirkende Lenkeinrichtung 220 befestigt sind, wobei der Rahmen 110 vier Seitenstreben 111, 112, 113, 114 aufweist, die jeweils paarweise über Gelenkeinrichtungen 115, 116, 117, und 118 miteinander verbunden sind. Jede der Seitenstreben 111, 112, 113, 114 ist dabei aus zwei parallel angeordneten Einzelstreben zusammengesetzt, wobei in der Figur die dargestellten Seitenstreben 111, 112, 113, 114 die dahinterliegenden entsprechenden Einzelstreben verdecken und wobei die Gelenkeinrichtungen 115, 116, 117, und 118 zwischen den jeweiligen Einzelstreben angeordnet sind.

Die vier Seitenstreben 111, 112, 113, 114 des Rahmens 110 weisen die Form eines gleichschenkligen Parallelogramms auf, wobei der Sattel 130 über eine Trägereinrichtung 120, 121 mit einer ersten Gelenkeinrichtung 116 des Rahmens 110 verbunden ist. Die erste Gelenkverbeindung 116 ist gegen eine ihr gegenüberliegende zweite Gelenkverbindung 118 mittels einer in einer Höhlung 230 eines Hohlrohes 240 gelagerten Spiralfeder 250 so vorgespannt, dass bei Absenz weiterer Krafteinwirkungen ein fest vorgegebenen Winkel zwischen den Seitenstreben 111, 112, 113, 114 des Parallelogramms vorgegeben ist. Das Hohlrohr 240 ist dabei integral mit der Trägereinrichtung 120, 121 des Sattels ausgebildet.

Das Hohlrohr 240 ist gebogen ausgebildet und weist einen Krümmungsradius auf, der demjenigen eines Kreises mit einem Radius der Länge derjenigen Seitenstreben 112, 113, entspricht, die an die mit der Achse 140 des Hinterrades 150 verbundene dritte Gelenkeinrichtung 117 angrenzen, wobei das Rohr 140 seitliche Aussparungen zur Aufnahme der zweiten Gelenkeinrichtung 118 aufweist.

Im Bereich jeder der Gelenkeinrichtungen 115, 116, 117, und 118 sind zusätzliche Federeinrichtungen vorgesehen, die von Spiralfedern 215, 216, und 217 gebildet sind und eine weitere Federung des Sattels 130 gegen vertikal als auch horizontal gerichtete Stöße bewirken.

Die Antriebseinrichtung 180 mit Pedalen 160, 161 und einem Kettentrieb 170 der Achse 140 des Hinterrades 150 ist im Bereich desjenigen Endes des Hohlrohres 240 befestigt, das dem Sattel 130 gegenüberliegt.

Die oben erläuterten Ausführungsbeispiele der Erfindung dienen lediglich dem Zweck eines besseren Verständnisses der durch die Ansprüche vorgegebenen erfindungsgemäßen Lehre, die als solche durch das Ausführungsbeispiel nicht eingeschränkt ist.

## Patentansprüche

1. Fahrrad-Vorrichtung mit einem Rahmen, an dem ein Sattel, eine Achse eines Hinterrades, eine mit zwei Pedalen versehene und über eine Kette mit der Achse des Hinterrades verbundene Antriebseinrichtung sowie eine auf eine die Achse eines Vorderrades tragende Gabel wirkende Lenkeinrichtung vorgesehen sind, **dadurch gekennzeichnet, dass** der Rahmen eine Mehrzahl von Seitenstreben aufweist, die jeweils paarweise über Gelenkeinrichtungen miteinander verbunden sind.

2. Vorrichtung nach Anspruch 1, **dadurch gekennzeichnet, dass** der Rahmen vier Seitenstreben aufweist, die jeweils paarweise über Gelenkeinrichtungen miteinander verbunden sind.

3. Vorrichtung nach einem der Ansprüche 1 oder 2, **dadurch gekennzeichnet, dass** eine Seitenstrebe zwei parallel angeordnete Einzelstreben enthält.

4. Vorrichtung nach einem der vorhergehenden Ansprüche, **dadurch gekennzeichnet, dass** die vier Seitenstreben des Rahmens die Form eines Parallelogramms aufweisen.

5. Vorrichtung nach Anspruch 4, **dadurch gekennzeichnet, dass** das Parallelogramm gleichschenklig ausgebildet ist

6. Vorrichtung nach einem der vorhergehenden Ansprüche, **dadurch gekennzeichnet, dass** der Sattel in der Nachbarschaft einer ersten Gelenkeinrichtung mit dem Rahmen verbunden ist.

7. Vorrichtung nach Anspruche 6, **dadurch gekennzeichnet, dass** die erste Gelenkverbeindung gegen eine ihr gegenüberliegende zweite Gelenkverbindung mittels einer Federeinrichtung so vorgespannt ist, dass bei Absenz weiterer Krafteinwirkungen ein fest vorgegebenen Winkel zwischen den Seitenstreben des Parallelogramms vorgegeben ist.

8. Vorrichtung nach Anspruch 7, **dadurch gekennzeichnet, dass** die Federeinrichtung eine Spiralfeder ist.

9. Vorrichtung nach Anspruch 7, **dadurch gekennzeichnet, dass** die Federeinrichtung eine Gasdruckfeder ist.

10. Vorrichtung nach einem der Ansprüche 7 bis 9, **dadurch gekennzeichnet, dass** die Federeinrichtung im Inneren eines Hohlrohes angeordnet ist.

11. Vorrichtung nach Anspruch 10, **dadurch gekennzeichnet, dass** das Hohlrohr gebogen ist und einen Krümmungsradius aufweist, der demjenigen eines Kreises mit einem Radius der Länge derjenigen Seitenstreben entspricht, die an die mit der Achse des Hinterrades verbundene dritte Gelenkeinrichtung angrenzen, wobei das Hohlrohr seitliche Aussparungen zur Aufnahme der zweiten Gelenkeinrichtung aufweist.

12. Vorrichtung nach einem der vorhergehenden Ansprüche, **dadurch gekennzeichnet, dass** im Bereich jeder Gelenkeinrichtung zusätzliche Federeinrichtungen vorgesehen sind.

13. Vorrichtung nach Anspruch 12, **dadurch gekennzeichnet, dass** die Federeinrichtungen von Spiralfedern gebildet sind.

14. Vorrichtung nach Anspruch 12, **dadurch gekennzeichnet, dass** die Federeinrichtungen von Gasdruckfedern gebildet sind.

15. Vorrichtung nach Anspruch 12, **dadurch gekennzeichnet, dass** die Federeinrichtungen von einem elastischen Kunststoffmaterial gebildet sind.

16. Vorrichtung nach einem der Ansprüche 1 bis 15, **dadurch gekennzeichnet, dass** die Antriebseinrichtung in der Nachbarschaft der zweiten Gelenkeinrichtung an dem Rahmen befestigt ist.

17. Vorrichtung nach einem der Ansprüche 1 bis 15, **dadurch gekennzeichnet, dass** die Antriebseinrichtung an demjenigen Ende des Hohlrohres befestigt ist, das dem Sattel gegenüberliegt.

## Geänderte Patentansprüche

### Geänderte Ansprüche nach Art. 19.1 PCT

**1.** Fahrrad-Vorrichtung mit einem Rahmen, an dem ein Sattel, eine Achse eines Hinterrades, eine mit zwei Pedalen versehene und über eine Kette mit der Achse des Hinterrades verbundene Antriebseinrichtung sowie eine auf eine die Achse eines Vorderrades tragende Gabel wirkende Lenkeinrichtung vorgesehen sind, **dadurch gekennzeichnet, dass** der Rahmen vier Seitenstreben aufweist, die jeweils paarweise über Gelenkeinrichtungen miteinander verbunden sind.
